# NEUE EUROPÄISCHE PATENTSCHRIFT

(11) **EP 1 490 418 B2**
(45) Veröffentlichungstag und Bekanntmachung des Hinweises auf die Entscheidung über den Einspruch: **29.06.2011**
(45) Hinweis auf die Patenterteilung: 25.10.2006
(21) Anmeldenummer: 03706414.4
(22) Anmeldetag: 03.02.2003
(51) Int. Cl.: C08G 18/08, C08G 18/10, C08G 18/67, C09D 5/44, C09D 175/16, C09J 175/08, C08G 18/48, C08G 18/12, C08G 18/76, C08G 18/32, C08G 18/50, C08G 65/332, C08G 18/40, C08G 65/333, C08K 7/02, C08G 18/66

(54) **Farbneutraler 1K Polyurethan-Klebstoff**
NEUTRAL-COLOURED 1K POLYURETHANE ADHESIVE
Adhesif Polyurethane a une composante de couleur neutre

(30) Priorität: 08.02.2002 DE 10205340
(43) Veröffentlichungstag der Anmeldung: 29.12.2004
(73) Patentinhaber: Henkel AG & Co. KGaA, 40589 Düsseldorf (DE)
(72) Erfinder: GRÜNEWÄLDER, Bernhard, 40721 Hilden (DE); HALLER, Werner, 40699 Erkrath (DE); NESS, Birgit, 40764 Langenfeld (DE); EMPT, Thomas, 41747 Viersen (DE)
(86) Internationale Anmeldenummer: PCT/EP2003/001018
(87) Internationale Veröffentlichungsnummer: WO 2003/066700

(56) Entgegenhaltungen:
- EP-A- 0 731 119
- WO-A-02/26848
- WO-A-97/10274
- DE-A- 19 958 488
- US-A- 4 038 239
- US-A- 4 297 444
- US-A- 5 142 013
- US-A- 5 231 159

## Beschreibung

Die vorliegende Erfindung betrifft ein Polyurethanpräpolymeres, das aus mindestens einem in bezug auf NCO-Gruppen symmetrisch substituierten Polyisocyanat und mindestens einem in bezug auf NCO-Gruppen asymmetrisch substituierten Polyisocyanat, mindestens einem Polyol mit einer OH-Funktionalität von mehr als 2,5 mit einem Molekulargewicht von 1.000 oder weniger und mindestens einem Polyol mit einer OH-Funktionalität von weniger als 2,5 mit einem Molekulargewicht von 1.000 oder mehr herstellbar ist, ein Verfahren zur Herstellung eines solchen Polyurethanpräpolymeren, einen Klebstoff enthaltend mindestens ein solches Polyurethanpräpolymeres und dessen Verwendung.

Einkomponentige Polyurethan-Klebstoffe (1K PU-Klebstoffe) finden immer häufiger Anwendung, da sie gegenüber Polyvinylacetat-Dispersionen (PVAc-Dispersionen) erhebliche Vorteile in Bezug auf Wärme- und Wasserfestigkeit haben. Solche Klebstoffe, die sehr oft im Bereich der Holzverklebung eingesetzt werden weisen den Nachteil auf, dass sich aufgrund ihrer Eigenfarbe die Klebstofffuge abzeichnet. Im Bereich der Möbelindustrie, des Innenausbaus aber auch im industriellen Bereich, wo bestimmte helle Modehölzer wie z.B. Limba, Esche oder Ahorn immer häufiger zum Einsatz kommen, sind Klebstoffe gefordert, bei denen die Leimfuge nicht oder nur sehr wenig sichtbar ist.

Davon sind insbesondere alle Mehrschichtverleimungen betroffen, bei denen für die herzustellenden Formteile eine hohe Zahl von Laminaten zusammengeleimt wird, wobei sich abzeichnende Leimfugen eine starke Störung des visuellen Gesamteindrucks erzeugen. Zwar sind beispielsweise Klebstoffe auf Basis von Polyvinylacetat durch ihre Farbneutralität bekannt, diese können aber aus verschiedenen Gründen nur eingeschränkt eingesetzt werden.

Ist z.B. eine hohe Wärme- oder Wasserfestigkeit der Verklebung gefordert, so eignen sich die letztgenannten Klebstoffe nur bedingt und nicht für alle Anforderungen. Insbesondere können PVAc-Dispersionen aufgrund ihres hohen Wassergehaltes von ca. 50 % oder mehr bei Mehrschichtverleimungen in der Regel nicht eingesetzt werden, da der Wasseranteil die Trocknung unwirtschaftlich lange verzögert und oft aufgrund der thermoplastischen Eigenschaften der Klebstoffpolymere oft ausreichende Formstabilität der Verklebung gewährleistet ist.

Ähnliche Probleme ergeben sich grundsätzlich auch bei Verklebungen, die unterschiedliche Materialien, beispielsweise Holz und Papier, Holz und Textilien, Holz und Leder und dergleichen Mischmaterialien verbinden.

Um die beschriebenen Probleme mit Klebstoffen auf Basis von Polyvinylacetat zu vermeiden, werden zunehmend Klebstoffe auf Basis von Polyurethanen in den oben genannten Bereichen eingesetzt. Polyurethane eigneten sich jedoch bislang ebenfalls nur bedingt für einen Einsatz in den oben genannten Gebieten. Problematisch wirkt sich bei Polyurethanen in der Regel aus, dass die eine nicht unbeträchtliche Eigenfärbung aufweisen.

Zwar gibt es Polyurethanklebstoffe, die nur eine geringe Eigenfarbe haben und weniger stark in einer Leimfuge zu erkennen sind. Derartige Polyurethanklebstoffe diese weisen aber oft andere Nachteile auf. So haben solche Klebstoffe in der Regel zu kurze offene Zeiten oder aber weisen bei akzeptablen offenen Zeiten eine zu lange Aushärtezeit auf.

Die DE 44 26 130 A1 betrifft Isocyanatgruppen enthaltende reaktive Hotmeltsysteme auf Basis von Hydroxypolyolen und Diphenylmethandiisocyanaten, die einen Gehalt von mindestens 70 Gew.-% an 2,4'-Diphenylmethandiisocyanat aufweisen. Problematisch wirkt sich bei diesen Zusammensetzungen die in der Praxis oft zu geringe Aushärtungsgeschwindigkeit aus.

Die EP 0 568 425 A1 betrifft es Klebstoffzusammensetzungen auf Basis von Polyurethan Präpolymeren, die sich durch Umsetzung von MDI mit Polyetherpolyolen erhalten lassen. Die eingesetzten MDI-Typen werden im Hinblick auf ihre Zusammensetzung nicht näher charakterisiert.

Die DE 199 35 489 A1 betrifft eine Klebstoffzusammensetzung für Keilzinkenverleimung die bis zu 99,999 Gew.-% eines Präpolymeren enthält, das durch Umsetzung mindestens einer gegenüber Isocyanaten reaktiven Verbindung und mindestens einer ein Isocyanat aufweisenden Verbindung erhältlich ist. Beschrieben wird beispielsweise der Einsatz von 4,4'-MDI oder von Mischungen aus 2,4'-MDI und 4,4'-MDI, wobei im Falle des Einsatzes von Gemischen ausschließlich solche Mischungen beschrieben werden, welche die beiden Isomeren in gleichen Anteilen enthalten bzw. Mischungen, in denen der Anteil an unsymmetrischem Isomeren überwiegt. Derartige Zusammensetzungen weisen jedoch die bereits oben genannten Nachteile auf.

Es bestand daher ein Bedarf an hellen, lagerstabilen Polyurethanklebstoffen, die bei praxisgerechten Verarbeitungszeiten schnell aushärten und die Anforderungen an Wasser- und Wärmefestigkeit erfüllen.

Um PU-Klebstoffe von heller Farbe herzustellen, ist es notwendig Isocyanate zu verwenden, die von Hause aus eine helle Farbe besitzen. Das sogenannte Polymer-MDI kommt für derartige Klebstoffe daher in Frage, da diese Verbindung eine dunkle Eigenfarbe aufweist. Zum Einsatz kommen daher in der Regel aromatische Polyisocyanat-Typen mit einer Funktonalität von ca. 2,0. Problematisch wirkt sich bei solchen Klebstoffen auf Basis von difunktionellen Isocyanaten jedoch aus, dass deren Reaktivität sich stark von der Reaktivität derjenigen Klebstoffe unterscheidet, die unter Verwendung von Polymer-MDI gefertigt werden. So kann man durch Einsatz von Polymer-MDI Präpolymere herstellen, die eine verhältnismäßig lange offene Zeit bei relativ kurzer Aushärtungszeit zeigen, während dieses Eigenschaftspaar bislang bei aromatischen Polyisocyanat-Typen mit einer Funktonalität von ca. 2,0 nicht zur Verfügung stand.

Die letztgenannten Eigenschaften werden aber grundsätzlich vom Anwender solcher Klebstoffe gefordert. Um die oben bereits beschriebenen Anwendungen auch für Polyurethan-Klebstoffe zugänglich zu machen, sind daher helle Klebstoffe erforderlich, die gleichzeitig genannten Eigenschaften in Bezug auf Verarbeitungszeit, Aushärtezeit, Wasserfestigkeit und Wärmefestigkeit aufweisen. Bei den bislang auf Basis von Diisocyanaten hergestellten PU-Klebstoffen zeigt sich jedoch, dass entweder die Verarbeitungszeit zu kurz ist oder die Aushärtezeit zu lange dauert. Zwar kann man durch entsprechende Anpassung der Rezeptur, beispielsweise durch Anpassung der eingesetzten Menge an Katalysator, die Reaktivität beeinflussen. Jedoch ist bei gleich langer offener Zeit die Aushärtung dann wesentlich langsamer oder bei gleicher Aushärtungszeit die offene Zeit erheblich kürzer.

Darüber hinaus ist es möglich, mit MDI-Typen die einen Anteil an 2,4-MDI enthalten die Reaktivität und Farbe zufriedenstellend einzustellen, jedoch sind Wärme und Wasserfestigkeit bei derartigen Klebstoffen oft nicht ausreichend.

Es bestand daher die Aufgabe einen Klebstoff zur Verfügung zu stellen, der die obengenannten Nachteile des Standes der Technik nicht aufweist, insbesondere lag der Erfindung die Aufgabe zugrunde, einen Klebstoff zur Verfügung zu stellen, der eine ausreichende offene Zeit bei gleichzeitig kurzen Aushärtungszeiten aufweist. Darüber hinaus lag der Erfindung die Aufgabe zugrunde einen Klebstoff zur Verfügung zu stellen, der die obengenannten Eigenschaften aufweist und darüber hinaus gegenüber den zu verklebenden Materialien im Hinblick auf die Klebefuge im wesentlichen farbneutral wirkt.

Es wurde nun gefunden, dass PU-Klebstoffe, die aus monomeren MDI-Typen, die einem Anteil an 2,4-MDI und Polyolen mit einer OH-Funktionalität von mehr als 2,5 erhältlich sind ausgezeichnete Eigenschaften bezüglich offener Zelt, Aushärtezeit, Wasser- und Wärmefestigkeit aufweisen. Die Eigenschaften sind mit denen von Klebstoffen auf Basis von Polymer-MDI vergleichbar, wobei die Farbe eines PU-Klebstoffes aus monomeren MDI-Typen, die einem Anteil an 2,4-MDI und Polyolen mit einer OH-Funktionalität von mehr als 2,5 deutlich gegenüber den unter Einsatz von Polymer-MDI erhältlichen PU-Klebstoffen verbessert ist.

Gegenstand der vorliegenden Erfindung ist daher ein Klebstoff mindestens enthaltend ein Polyurethanpräpolymeres, erhältlich durch Umsetzung von mindestens einem aromatischen Polyisocyanat das eine im Hinblick auf NCO-Gruppen symmetrische Substitution aufweist und mindestens einem aromatischen Polyisocyanat das eine im Hinblick auf NCO-Gruppen asymmetrische Substitution aufweist, wobei der Anteil an aromatischem Polyisocyanat das eine im Hinblick auf NCO-Gruppen symmetrische Substitution aufweist oder derAnteil an Gemisch aus zwei oder mehr solcher aromatischen Polyisocyanate höher ist, als der Anteil an Polyisocyanat das eine im Hinblick auf NCO-Gruppen asymmetrische Substitution aufweist oder der Anteil an Gemisch aus zwei oder mehr solcher aromatischen Polyisocyanate, und mindestens einem Polyol mit einer OH-Funkfionalität von mehr als 2,5 mit einem Molekulargewicht von 1.000 oder weniger und mindestens einem Polyol mit einer OH-Funkionalität von weniger als 2,5 mit einem Molekulargewicht von 1.000 oder mehr, wobei der Klebstoff das aromatische Polyisocyanat, das eine im Hinblick auf NCO-Gruppen symmetrische Substitution aufweist oder ein Gemisch aus zwei oder mehr solcher aromatischer Polyisocyanate und das aromatische Polyisocyanat, das eine im Hinblick auf NCO-Gruppen asymmetrische Substitution aufweist oder ein Gemisch aus zwei oder mehr solcher Isocyanate in einem Gewichtsverhältnis von 5:1 bis 2,5:1 enthält.

Ein erfindungsgemäßer Klebstoff enthält also ein Umsetzungsprodukt, das durch Umsetzung der oben genannten Komponenten erhältlich ist. Ein solches erfindungsgemäßes Umsetzungsprodukt weist pro Molekül mindestens eine NCO-Gruppe, vorzugsweise mehr als eine NCO-Gruppe, beispielsweise mindestens etwa 1,1 oder mindestens etwa 1,5 NCO-Gruppen auf. Vorzugsweise beträgt die Zahl der NCO-Gruppen jedoch mindestens etwa 2, beispielsweise durchschnittlich mindestens etwa 2,1 oder mehr. Ein solches Umsetzungsprodukt wird im Rahmen der vorliegenden Erfindung auch als Polyurethanpräpolymeres bezeichnet. Der erfindungsgemäß aus einem derartigen Polyurethanpräpolymeren erhältliche Klebstoff kann im Rahmen der vorliegenden Erfindung ausschließlich, d.h. im wesentlichen zu 100 Gew.-% aus einem solchen Polyurethahpräpolymeren oder einem Gemisch aus zwei oder mehr davon bestehen. Es ist jedoch erfindungsgemäß ebenso möglich, dass ein erfindungsgemäßer Klebstoff ein solches Polyurethanpräpolymeres oder ein Gemisch aus zwei oder mehr davon in einer Menge von weniger als 100 Gew.%, beispielsweise In einer Menge von etwa 30 bis etwa 99 Gew.% oder etwa 50 bis etwa 95 Gew.-% enthält, wobei die zu 100 Gew.-% fehlende Menge aus Zusatzstoffen besteht wie sie im Rahmen des weiteren Textes beschrieben werden.

Als Polyisocyanate eignen sich zur Herstellung der erfindungsgemäßen Klebstoffe grundsätzlich beliebige aromatische Isocyanate, sofern sie die oben genannten Bedingungen In Hinblick auf die Symmetrie der NCO-Gruppen erfüllen.

Vorzugsweise werden Diisocyanate Q(NCO)₂ eingesetzt, wobei Q für einen gegebenenfalls substituierten aromatischen Kohlenwasserstoffrest mit 6 bis etwa 15 Kohlenstoffatomen oder einen gegebenenfalls substituierten araliphatischen Kohlenwasserstoffrest mit 7 bis etwa 15 Kohlenstoffatomen steht Beispiele für solche Diisocyanate sind, 1,3- und 1,4-Diisocyanato-benzol, 2,4- oder 2,6-Diisocyanato-toluol (2,4- oder 2,6-TDI) oder deren Gemisch, 2,2'-, 2,4'-oder4,4'-Diisocyanatodiphenylmethan (MDI), Tetramethylxylylendiisocyanat (TMXDI), p-Xylylendiisocyanat, sowie aus diesen Verbindungen bestehende Gemische.

Im Rahmen einer bevorzugten Ausführungsform der vorliegenden Erfindung wird zur Herstellung eines erfindungsgemäßen Klebstoffs als Polyisocyanat mindestens ein aromatisches Polyisocyanat eingesetzt das mindestens zwei aromatische Kerne aufweist.

Geeignete Isocyanate mit mindestens zwei aromatischen Kernen sind insbesondere die Polyisocyanate des Biphenyls, des Diphenylmethans oder des 2,2-Diphenylpropans.

Besonders bei der Herstellung eines erfindungsgemäßen Klebstoffes bevorzugt sind die Stellungsisomeren des Diphenylmethandiisocyanats (MDI).

Im Rahmen einer weiteren bevorzugten Ausführungsform der vorliegenden Erfindung enthält ein erfindungsgemäßer Klebstoff daher als mindestens ein aromatisches Polyisocyanat das eine im Hinblick aufNCO-Gruppen symmetrische Substitution aufweist 4,4'-Diphenylmethandiisocyanat oder das entsprechende Carbodiimidderivat oder ein Gemisch aus zwei oder mehr davon.

Im Rahmen einer weiteren bevorzugten Ausführungsform der vorliegenden Erfindung enthält ein erfindungsgemäßer Klebstoff als mindestens ein aromatisches Polyisocyanat das eine im Hinblick auf NCO-Gruppen asymmetrische Substitution aufweist 2,4'-Diphenylmethandiisocyanat oder das entsprechende Carbodiimidderivat oder ein Gemisch aus zwei oder mehr davon.

Es ist selbstverständlich auch möglich, die in der Polyurethanchemie an sich bekannten höherfunktionellen Polyisocyanate oder auch an sich bekannte modifizierte, beispielsweise Carbodilmidgruppen, Allophanatgruppen, isocyanuratgruppen, Urethangruppen oder Biuretgruppen aufweisende Polyisocyanate anteilig mit zu verwenden.

Ein erfindungsgemäßer PU-Klebstoff entfaltet dann seine ausgezeichneten Eigenschaften, wenn ermindestens ein aromatisches Polyisocyanat das eine im Hinblick auf NCO-Gruppen symmetrische Substitution aufweist oder ein Gemisch aus zwei oder mehr solcher aromatischen Polyisocyanate und mindestens ein aromatisches Polyisocyanat das eine Im Hinblick auf NCO-Gruppen asymmetrische Substitution aufweist oder ein Gemisch aus zwei oder mehr solcher aromatischen Polyisocyanate in einem bestimmten Gewichtsverhältnis enthält. Grundsätzlich ist es erfindungsgemäß erforderlich, dass der Anteil an Polyisocyanat das eine im Hinblick auf NCO-Gruppen symmetrische Substitution aufweist oder der Anteil an Gemisch aus zwei oder mehr solcher aromatischen Polyisocyanate höher ist, als der Anteil an Polyisocyanat das eine im Hinblick auf NCO-Gruppen asymmetrische Substitution aufweist oder der Anteil an Gemisch aus zwei oder mehr solcher aromatischen Polyisocyanate.

Ein erfindungsgemäßer Klebstoff enthält daher das aromatische Polyisocyanat das eine im Hinblick auf NCO-Gruppen symmetrische Substitution aufweist oder ein Gemisch aus zwei oder mehr solcher aromatischer Polyisocyanate und das aromatische Polyisocyanat das eine im Hinblick auf NCO-Gruppen asymmetrische Substitution aufweist oder ein Gemisch aus zwei oder mehr solcher Isocyanate in einem Gewichtsverhältnis von etwa 5:1 bis etwa 2,5:1 insbesondere in einem Verhaltnis von etwa 4:1 bis etwa 2,8:1.

Unter dem Begriff "Polyisocyanate" werden im Rahmen des vorliegenden Textes Isocyanate mit einer NCO-Funktionalität von mehr als 1,0 verstanden, beispielsweise einer NCO-Funktionalität von etwa 1,5 oder etwa 2, oder etwa 2,5 bis etwa 3,5, beispielsweise etwa 3, oder eine darüber liegende Funktionalität von beispielsweise etwa 4 oder etwa 5 oder mehr. Die Funktionalität muss dabei nicht unbedingt mit einer ganzen Zahl ausgedrückt werden, es sind auch nicht ganzzahlige Funkdonalitäten möglich. Solche nicht ganzzahligen Funktionalitäten liegen beispielsweise in Gemischen von Polyisocyanaten unterschiedlicher Funktionalität vor, wobei die Gesamtfunktionalität über die im Isocyanatgemisch vorliegende Gesamtzahl an Molekülen und die Gesamtzahl an Isocyanatgruppen, bezogen auf das gesamte Gemisch, ermittelt wird. Dies ist Insbesondere beim Einsatz technischer Isocyanatgemische wichtig, die in der Regel nicht zu 100 % aus einer bestimmten Isocyanattype bestehen.

Die erfindungsgemäß einsetzbaren aromatischen Polyisocyanate die eine im Hinblick auf NCO-Gruppen symmetrische Substitution aufweisen und die erfindungsgemäß einsetzbaren aromatischen Polyisocyanate die eine im Hinblick auf NCO-Gruppen asymmetrische Substitution aufweisen verfügen vorzugsweise über eine durchschnittliche NCO-Funktionalität von mindestens etwa 1,8, vorzugsweise mindestens etwa 2 bis etwa 5. Im Rahmen einer bevorzugten Ausführungsform der vorliegenden Erfindung beträgt durchschnittliche NCO-Funktionalität derartiger Polyisocyanate etwa 1,9 bis etwa 2,1.

Neben den oben genannten, obliagatorischen Polyisocyanattypen kann ein erfindungsgemäßer PU-Klebstoff noch ein weiteres Isocyanat oder ein Gemisch aus zwei oder mehr Isocyanaten enthalten. Geeignet sind hierbei beispielsweise allphatische oder cycloaliphatische Isocyanate, vorzugsweise Polyisocyanate der allgemeinen Formel Q (NCO)₂, wobei Q für einen aliphatischen, gegebenenfalls substituierten-Kohlenwasserstoffrest mit 4 bis etwa 12 Kohlenstoffatomen oder einen gegebenenfalls substituierten cycloaliphatischen Kohlenwasserstoffrest mit 6 bis etwa 15 Kohlenstoffatomen steht. Beispiele für solche Diisocyanate sind Tetramethylendiisocyanat, Hexamethylendiisocyanat (HDI), Dodecamethylendiisocyanat. Dimerfettsäuredüsocyanat, 1,4-Diisocyanatacyclohexan, 1-Isocyanato-3,3,5-trimethyl-5-isocyanato-methylcyclohexan (Isophorondiisocyanat, IPDI), 4,4'-Diisocyanato-dicyclohexylmethyl oder 4,4'-Diisocyanato-dicyclohexyipropan-2,2, sowie aus diesen Verbindungen bestehende Gemische. Besonders geeignet sind darüber hinaus als untergeordnete Bestandteile auch polymere Polyisocyanate wie Oligomer- oder Polymer-MDl sowie dessen isomere und Homologe oder Polyisocyanate wie sie durch Phosgenierung technischer Polyamingemische aus der Anilin-Formaldehyd-Kondensation erhältlich sind. Derartige Gemische weisen beispielsweise eine Funktionalität von etwa 2,0 bis etwa 5,0, insbesondere etwa 2,5 bis etwa 4,5, auf.

Es ist selbstverständlich auch möglich, die in der Polyurethanchemie an sich bekannten höherfunktionellen aliphatischen oder cycloaliphatischen Polyisocyanate oder auch an sich bekannte modifizierte, beispielsweise Carbodiimidgruppen, Allophanatgruppen, Isocyanuratgruppen, Urethangruppen oder Biuretgruppen aufweisende Polyisocyanate anteilig mit zu verwenden.

Beispielsweise selen als in geringen Mengen anteilig geeignete Isocyanate genannt hydriertes MDI (H₁₂MDI), 1-Methyl-2,4-diisocyanato-cyclohexan, 1,6-Diisocyanato-2,2,4-trimethylhexan, 1,6-Diisocyanato-2,4,4-trimethylhexan, chlorierte und bromierte Diisocyanate, phosphorhaltige Diisocyanate, 4,4'-Diisocyanatophenylperfluorethan, Tetramethoxybutan-l,4-diisocyanat, Dicyclohexylmethandüsocyanat, Cyclohexan-1,4-diisocyanat, Ethylendiisocyanat, Phthalsäurebisisocyanatoethylester, ferner Polyisocyanate mit reaktionsfähigen Halogenatomen, wie 1-Chlormethylphenyl-2,4-düsocyanat, 1-Brommethylphenyl-2,6-diisocyanat, 3,3-Bis-chlormethylether-4,4'-diphenyldüsocyanat. Schwefelhaltige Polyisocyanate erhält man beispielsweise durch Umsetzung von 2 mol Hexamethylendiisocyanat mit 1 mol Thiodiglykol oder Dihydroxydihexylsulfid. Weitere wichtige Diisocyanate sind Trimethylhexamethylendiisocyanat, 1,4-Diisocyanatobutan, 1,12-Diisocyanatododecan und Dimerfettsäurediisocyanat. Ebenfalls geeignet sind teilweise verkappte Polyisocyanate, welche die Bildung selbstvernetzender Polyurethane ermöglichen, z.B. dimeres Toluylendiisocyanat, oder mit beispielsweise Phenolen, tertiärem Butanol, Phthalimid, Caprolactam partiell oder vollständig umgesetzte Polyisocyanate.

Der Anteil solcher weiteren Isocyanate im erfindungsgemäßen Klebstoff liegt vorzugsweise bei höchstens etwa 10 Gew.-%, beispielsweise bei etwa 0 bis etwa 5 Gew.-%.

Neben einem Gemisch aus Polyisocyanaten, wie es oben im Rahmen des vorliegenden Textes beschrieben wurde, enthält ein erfindungsgemäßer Klebstoff noch mindestens ein Polyol mit einer OH-Funktionalität von mehr als 2,5. Grundsätzlich sind als Polyole mit einer OH-Funktionalität von mehr als 2,5 alle Polyole geeignet, die eine durchschnittliche OH-Funktionalität von mehr als etwa 2,5 aufweisen. Die OH-Funktionalität muss dabei nicht unbedingt mit einer ganzen Zahl ausgedrückt werden, es sind auch nicht ganzzahlige OH-Funktionalitäten möglich. Solche nicht ganzzahligen OH-Funktionalitäten liegen beispielsweise bei Gemischen von Polyolen unterschiedlicher OH-Funktionalität vor, wobei die Gesamtfunktionalität über die im Polyolgemisch vorliegende Gesamtzahl an Molekülen und die Gesamtzahl an OH-Gruppen, bezogen auf das gesamte Gemisch, ermittelt wird.

Als Polyole mit einer OH-Funktionalität von mehr als etwa 2,5 eignen sich grundsätzlich alle Polyole oder Polyolgemische, wie sie dem Fachmann für Polyurethanherstellung bekannt sind und üblicherweise bei der Herstellung von Polyurethanen eingesetzt werden können. Im Rahmen der vorliegenden Erfindung können Polyole aus der Gruppe der Polyetherpolyole, Polyesterpolyole, Polyetheresterpolyole, Polyalkylendiole, Polycarbonate oder Polyacetale, oder ein Gemisch aus zwei oder mehr davon, mit mindestens jeweils 2, 3, 4 oder mehr OH-Gruppen, vorzugsweise jedoch nicht mehr als etwa 4 OH-Gruppen, eingesetzt werden. Entscheidend ist im Rahmen der vorliegenden Erfindung, dass das Gesamtgemisch eine OH-Funktionalität von mehr als etwa 2,5 bis zu vorzugsweise etwa 6, insbesondere etwa 2,8 bis etwa 5, beispielsweise etwa 3 bis etwa 4 aufweist.

Im Rahmen der vorliegenden Erfindung werden zur Herstellung der erfindungsgemäßen Klebstoffe Polyole mit einer durchschnittlichen OH-Funktionalität eingesetzt, die ein durchschnittliches Molekulargewicht von weniger als etwa 1000, insbesondere weniger als etwa 800 oder weniger als etwa 600 aufweisen.

Besonders als Polyole mit einer OH-Funktionalität von mehr als 2,5 geeignet sind beispielsweise Glyzerin, Trimethylolpropan, Triethylolpropan, Pentaerythrit oder Zuckeralkohole, wie Sorbit, Mannit oder Glucose oder deren Etheralkoholderivate, wie sie sich durch ringöffnende Umsetzung der oben genannten Alkohole mit niedermolekularen Epoxiden mit 1 bis etwa 6 C-Atomen, insbesondere mit Ethylenoxid oder Propylenoxid oder Gemischen aus zwei oder mehr solcher niedermolekularen Epoxide erhalten lassen.

Im Rahmen einer bevorzugten Ausführungsform der vorliegenden Erfindung werden als Polyole mit einer OH-Funktionalität von mehr als 2,5 Glyzerin, Trimethylolpropan, Triethylolpropan oder Pentaerythrit, insbesondere Glyzerin, Trimethylolpropan oder Triethylolpropan sowie deren Polyetherderivate wie sie durch Ringöffnende Umsetzung der oben genannten Verbindungen mit Ethylenoxid oder Propylenoxid oder deren Gemisch statistisch oder Blockweise erhältlich sind. Besonders geeignete Polyole mit einer OH-Funktionalität von mehr als 2,5 weisen mindestens eine Ethergruppe und ein Molekulargewicht von weniger als 500, insbesondere etwa 300 bis etwa 450 auf.

Im Rahmen einer weiteren bevorzugten Ausführungsform der vorliegenden Erfindung wird zur Herstellung eines erfindungsgemäßen Klebstoffs als Polyol mit einer Funktionalität von mehr als 2,5 ein Polyol mit einer OH-Zahl von 250 bis etwa 600, insbesondere etwa 300 bis etwa 450 mg KOH/g, oder ein Gemisch aus zwei oder mehr solcher Polyole eingesetzt.

Das Polyol mit einer Funktionalität von mehr als 2,5 oder ein Gemisch aus zwei oder mehr solcher Polyole wird im Rahmen der vorliegenden Erfindung bei der Herstellung der erfindungsgemäßen Klebstoffe in einer Menge von etwa 0,1 bis etwa 15 Gew.-%, insbesondere in einer Menge von etwa 0,5 bis etwa 10 Gew.-% oder etwa 1 bis etwa 5 Gew.-%, bezogen auf den gesamten Klebstoff, eingesetzt.

Der erfindungsgemäße Einsatz von Polyolen mit einer Funktionalität von mehr als etwa 2,5 und insbesondere die bevorzugten Ausführungsform, nämlich der Einsatz entsprechender Polyole deren Molekulargewicht weniger als 1000 beträgt, führt im vorliegenden Fall zu Polyurethanpräpolymeren, die im Rahmen eines Einsatzes in Klebstoffen zu Zusammensetzungen führen, die eine deutlich verbesserte Querzugsanfangsfestigkeit, eine deutlich verbesserte Wärmefestigkeit und eine verbesserte Wasserfestigkeit aufweisen. Darüber hinaus wird häufig auch die Lagerstabilität solche Klebstoffe positiv beeinflusst.

Neben einem Polyol mit einer durchschnittlichen OH-Funktionalität von mehr als etwa 2,5 oder einem Gemisch aus zwei oder mehr solcher Polyole wird zur Herstellung eines erfindungsgemäßen Präpolymeren noch mindestens ein weiteres Polyol mit einer Funktionalität von 2,5 oder weniger eingesetzt.

Im Rahmen der vorliegenden Erfindung können als Polyole mit einer durchschnittlichen OH-Funktionalität von 2,5 oder weniger Polyole aus der Gruppe der Polyetherpolyole, Polyesterpolyole, Polyetheresterpolyole, Polyalkylendiole, Polycarbonate oder Polyacetale, oder Gemische aus zwei oder mehr davon, eingesetzt werden.

Vorzugsweise weisen die im Rahmen der vorliegenden Erfindung als Polyole mit einer durchschnittlichen OH-Funktionalität von 2,5 oder weniger einsetzbaren Polyole ein Molekulargewicht von mehr als etwa 500, insbesondere etwa 1000 oder mehr auf.

Derartige Polyole werden im Rahmen des nachfolgenden Textes auch "Polymerpolyole" bezeichnet.

Die genannten Polyoltypen und ihre Herstellung sind dem Fachmann aus dem Stand der Technik bekannt. So können beispielsweise Polyesterpolyole durch Reaktion von Dicarbonsäuren mit Diolen oder höheren Polyolen oder einem Gemisch von Diolen und höheren Polyolen oder einem Überschuss an Diolen oder höheren Polyolen oder deren Gemisch, sowie durch Ringöffnung von epoxidierten Estern, beispielsweise von epoxidierten Fettsäureestern, mit Alkoholen hergestellt werden.

Geeignete Polyesterpolyole sind beispielsweise durch Reaktion von Dicarbonsäuren mit Diolen oder höheren Polyolen oder einem Gemisch von Diolen und höheren Polyolen oder einem Überschuss an Diolen oder höheren Polyolen oder deren Gemisch, sowie durch Ringöffnung von epoxidierten Estern, beispielsweise von epoxidierten Fettsäureestern, mit Alkoholen erhältlich. Auch Polycaprolactondiole, beispielsweise herstellbar aus ε-Caprolacton und Diolen oder höheren Polyolen sind als Polyesterpolyole geeignet. Im Rahmen der vorliegenden Erfindung sind beispielsweise Polyesterpolyole einsetzbar, die aus niedermolekularen Dicarbonsäuren wie Bernsteinsäure, Glutarsäure, Adipinsäure, Isophthalsäure, Terephthalsäure oder Phthalsäure, oder einem Gemisch aus zwei oder mehr davon, mit einem Überschuss an linearen oder verzweigten, gesättigten oder ungesättigten aliphatischen Diolen mit etwa 2 bis etwa 12 Kohlenstoffatomen erhältlich sind. Gegebenenfalls kann bei der Herstellung der Polyesterpolyole noch ein geringer Anteil an höherwertigen Alkoholen vorliegen, hierzu zählen beispielsweise Glyzerin, Trimethylolpropan, Triethylolpropan, Pentaerythrit oder Zuckeralkohole, wie Sorbit, Mannit oder Glucose um eine gewünschte durchschnittliche OH-Funktionalität zu erhalten.

In Rahmen der vorliegenden Erfindung zur Herstellung der erfindungsgemäßen Klebstoffe geeignete Polyesterpolyole sind im wesentlichen linear und weisen beispielsweise ein Molekulargewicht von etwa 500 bis etwa 10.000, insbesondere etwa 1000 bis etwa 3000, sowie eine OH-Zahl von etwa 30 bis etwa 300, beispielsweise etwa 50 bis etwa 200 oder etwa 80 bis etwa 150 mg KOH/g, auf.

Auch Polycaprolactondiole, beispielsweise herstellbar aus ε-Caprolacton und Diolen oder höheren Polyolen sind als Polyesterpolyole geeignet. Im Rahmen der vorliegenden Erfindung sind zur Herstellung der Polyurethane beispielsweise Polyesterpolyole einsetzbar, die aus niedermolekularen Dicarbonsäuren wie Bernsteinsäure, Glutarsäure, Adipinsäure, Isophthalsäure, Terephthalsäure oder Phthalsäure, oder einem Gemisch aus zwei oder mehr davon, mit einem Überschuss an linearen oder verzweigten, gesättigten oder ungesättigten aliphatischen Diolen mit etwa 2 bis etwa 12 Kohlenstoffatomen erhältlich sind. Gegebenenfalls kann bei der Herstellung der Polyesterpolyole noch ein geringer Anteil an höherwertigen Alkoholen vorliegen, hierzu zählen beispielsweise Glyzerin, Trimethylolpropan, Triethylolpropan, Pentaerythrit oder Zuckeralkohole, wie Sorbit, Mannit oder Glucose. Vorzugsweise sind geeignete Polyesterpolyole jedoch im wesentlichen linear.

Als geeignete Polyacetale seien beispielsweise die Polykondensationsprodukte aus Formaldehyd und Diolen oder Polyolen oder deren Gemischen in Gegenwart saurer Katalysatoren genannt.

Polyalkylendiole wie Polybutadiendiol sind kommerziell erhältliche Produkte, die in verschiedenen Molekulargewichten angeboten werden. Sie eignen sich im Rahmen der vorliegenden Erfindung beispielsweise als Polyolkomponente bei der Herstellung von Polyurethanpräpolymeren, wie sie in den erfindungsgemäßen Dispersionen eingesetzt werden können.

Polyetherpolyole können beispielsweise durch Homo-, Co- oder Blockpolymerisation von Alkylenoxiden wie Ethylenoxid, Propylenoxid oder Butylenoxid, oder Gemischen aus zwei oder mehr davon, oder durch Umsetzung von Polyalkylenglykolen mit di- oder trifunktionellen Alkoholen oder deren Gemischen erhalten werden. Ebenso geeignet sind die polymerisierten Ringöffnungsprodukte von cyclischen Ethern, beispielsweise Tetrahydrofuran, mit entsprechenden Alkoholen als Startermoleküle. Wenn als Startermoleküle Esterverbindungen, beispielsweise Oligo- oder Polyester eingesetzt werden, so erhält man Polyetherester, die sowohl Ether als auch Estergruppen aufweisen.

In einer bevorzugten Ausführungsform der vorliegenden Erfindung werden als Polyole mit einer OH-Funktionalität von 2,5 oder weniger Polyetherpolyole eingesetzt. Vorzugsweise handelt es sich dabei um die Alkoxylierungsprodukte, insbesondere die Ethoxylierungs- oder Propoxylierungsprodukte difunktioneller Alkohole. Als difunktionelle Alkohole werden insbesondere Alkohole ausgewählt aus der Gruppe bestehend aus Ethylenglykol, Diethylenglykol, Triethylenglykol, 1,2-Propandiol, Dipropylenglykol, den isomeren Butandiolen, Hexandiolen, Octandiolen, technischen Gemischen von Hydroxyfettalkoholen mit 14 bis 22 C-Atomen, insbesondere Hydroxystearylalkohol, eingesetzt. Gegebenenfalls können bei der Alkoxylierungsreaktion in untergeordneten Mengen noch trifunktionelle Alkohole wie Trimethylolpropan oder Glycerin oder Gemische aus zwei oder mehr der genannten Alkohole vorliegen.

Neben den oben genannten Polyolen können zur Herstellung eines erfindungsgemäßen Klebstoffs anteilig auch lineare oder verzweigte, gesättigte oder ungesättigte aliphatische, monofunktionelle Alkohole, insbesondere Methanol, Ethanol, die Isomeren des Propanols, Butanols oder Hexanols sowie Fettalkohole mit etwa 8 bis etwa 22 C-Atomen, beispielsweise Octanol, Decanol, Dodecanol, Tetradecanol, Hexadecanol oder Octadecanol eingesetzt werden. Die genannten Fettalkohole sind beispielsweise durch Reduktion von natürlichen Fettsäuren erhältlich und können sowohl als Reinsubstanzen als auch in Form ihrer technischen Gemische eingesetzt werden. Gut geeignet sind beispielsweise lineare Monoalkohole und insbesondere solche mit etwa 4 bis etwa 18 C-Atomen. Anstelle der linearen oder verzweigten aliphatischen Alkohole oder in Abmischung mit diesen sind auch Monoalkylpolyetheralkohole unterschiedlichen Molekulargewichts, vorzugsweise in den Molekulargewichtsbereichen von etwa 1.000 bis etwa 2.000 einsetzbar.

Ebenfalls als Polyole mit einer durchschnittlichen OH-Funktionalität von 2,5 oder weniger einsetzbar sind mehrwertige, insbesondere zweiwertige Alkohole, wie sie beispielsweise durch Hydrierung von di- oder oligomeren Fettsäuren oder deren Estern erhältlich sind, Rizinusöl, mit C₁₋₄-Alkylalkoholen, ringgeöffnete, epoxidierte Fette oder Öle, C₁₂₋₁₈₋Fettsäurediethanolamide, Monoglyceride von aliphatischen C₈₋₂₂-Fettsäuren, Polypropylenglykole oder Polysiloxane mit endständigen OH-Gruppen, oder Gemische aus zwei oder mehr der genannten Verbindungen. Ebenfalls im Rahmen der vorliegenden Erfindung zur Herstellung der erfindungsgemäßem Polyurethanpräpolymere einsetzbar sind mehrwertige, insbesondere zweiwertige Alkohole wie Ethylenglykol, Propylenglykol, Propandiol-1,3, Butandiol-1,4 oder Hexandiol-1,6. Auch niedermolekulare Polyesterdiole wie Bernsteinsäure-, Glutarsäure- oder Adipinsäure-bis-(hydroxyethyl)-ester, oder ein Gemisch aus zwei oder mehr davon, oder niedermolekulare, Ethergruppen aufweisende Diole, wie Diethylenglykol, Triethylenglykol, Tetraethylenglykol, Dipropylenglykol, Tripropylenglykol oder Tetrapropylenglykol können anteilig im Rahmen des Gesamtgemischs der Polyole mit einer durchschnittlichen OH-Funktionalität von 2;5 oder weniger mit verwendet werden.

Im Rahmen einer weiteren bevorzugten Ausführungsform der vorliegenden Erfindung wird zur Herstellung eines erfindungsgemäßen Polyurethanpräpolymeren als Polyol mit einer OH-Funktionalität von weniger als 2,5 ein Polyol mit einer OH-Funktionalität von 2,1 oder weniger eingesetzt.

Im Rahmen einer weiteren bevorzugten Ausführungsform der vorliegenden Erfindung werden als Polyole mit einer OH-Funktionalität von 2,5 oder weniger Polymerpolyole, insbesondere Polyetherpolyole eingesetzt. Besonders bevorzugt sind dabei Polyetherpolyole, die ein Molekulargewicht von mindestens etwa 400, vorzugsweise jedoch mindestens etwa 600, beispielsweise etwa 800 bis etwa 6000 oder etwa 1000 bis etwa 3000 aufweisen. Grundsätzlich eignen sich dabei im Sinne der vorliegenden Erfindung die oben beschriebenen Polyetherpolyole aus C₂-C₈-Alkylenoxiden, vorzugsweise werden jedoch Polyetherpolyole eingesetzt, die aus C₃-C₅-Alkylenoxiden, insbesondere aus Propylenoxid aufgebaut sind. Besonders im Sinne der vorliegenden Erfindung geeignet sind die von der Firma BASF vertriebenen Polyetherpolyole der Lupranol-Reihe, beispielsweise Lupranol 1000 oder Voranol P 2000 der Firma Dow Chemicals.

Besonders geeignet sind im Rahmen der vorliegenden Erfindung beispielsweise Polyurethanpräpolymere, die aus etwa 40 bis etwa 60 Gew.-%, insbesondere etwa 45 bis etwa 55 Gew.-% eines etwa difunktionellen Polyalkylenglykols, beispielsweise eines Polyethylenglykols oder eines Polypropylenglykols, insbesondere eines Polypropylenglykols, hergestellt wurden, wobei das Molekulargewicht M_{w} des Polyalkylenglykols beispielsweise etwa 1500 bis etwa 2800, insbesondere etwa 1800 bis etwa 2500 oder etwa 1900 bis etwa 2200 beträgt. Weiterhin haben sich Polyurethanpräpolymere bewährt, bei deren Herstellung mindestens ein trifunktionelles Polyol mit einem Molekulargewicht von etwa 400 bis etwa 500 in einer Menge von etwa 1 bis etwa 8, beispielsweise etwa 2 bis etwa 6 oder etwa 3 bis etwa 5 Gew.-% eingesetzt wurde. Darüber hinaus sind besonders solche Polyurethanpräpolymere geeignet, bei deren Herstellung der Gewichtsanteil an Polyisocyanaten etwa 30 bis etwa 59 Gew.-%, beispielsweise etwa 38 bis etwa 55 oder etwa 43 bis etwa 50 Gew.-% betrug. Das Gewichtsverhältnis der aromatischen Polyisocyanate mit symmetrischer Substitution zu aromatischen Polyisocyanaten mit unsymmetrischer Substitution beträgt in solchen Fällen beispielsweise etwa 2:1 bis etwa 4:1, beispielsweise etwa 2,5:1 bis etwa 3,5:1.

Zum Einsatz als Polymerpolyole geeignete Verbindungen der vorgenannten Verbindungsklassen können bereits in einem zum Einsatz als Polymerpolyol geeigneten Molekulargewichtsbereich vorliegen. Es ist jedoch ebenso gut möglich, Verbindungen der obengenannten Verbindungsklassen zur Herstellung von Polymerpolyole einzusetzen, die ein Molekulargewicht aufweisen, das unterhalb des zum erfindungsgemäßen Einsatz als Polymerpolyol geeigneten Molekulargewichts oder gewünschten Molekulargewichts im Sinne der vorliegenden Erfindung liegt. In diesem Fall ist es im Rahmen der vorliegenden Erfindung möglich, solche Verbindungen der obengenannten Verbindungsklassen durch Umsetzung mit entsprechenden difunktionellen Verbindungen bis zum Erreichen des erforderlichen oder gewünschten Molekulargewichts zu verlängern. Hierzu eignen sich beispielsweise Dicarbonsäuren, difunktionelle Epoxyverbindungen oder Diisocyanate, wobei in einer bevorzugten Ausführungsform der vorliegenden Erfindung Diisocyanate eingesetzt werden.

Gegebenenfalls können während einer solchen Kettenverlängerung noch vergleichsweise niedermolekulare Diole vorliegen. Beispielsweise sind dies Diethylenglykol, 1,2-Ethandiol, 1,3-Propandiol, 2-Methyl-1,3-propandiol, 1,4-Butandiol, 1,5-Pentandiol, 1,6-Hexandiol, 1,7-Heptandiol, 1,8-Octandiol, 1,9-Nonandiol, 1,10-Decandiol sowie die entsprechenden höheren Homologen, wie sie sich durch schrittweise Verlängerung der Kohlenstoffkette der genannten Verbindungen bilden lassen sowie beispielsweise 2,2,4-Trimethylpentandiol-1,5, 2,2-Dimethylpropandiol-1,3, 1,4-Dimethylolcyclohexan, 1,4-Diethanolcyclohexan, 2-Methyl-2-butyl-1,3-propandiol, 2,2-Dimethyl-1,4-butandiol, 1,4-Dimethylolcyclohexan, Hydroxypivalinsäureneopentylglykolester, Diethylenglykol, Triethylenglykol, Methyldiethanolamin oder aromatisch-aliphatische oder aromatisch-cycloaliphatische Diole mit 8 bis etwa 30 C-Atomen, wobei als aromatische Strukturen heterocyclische Ringsysteme oder vorzugsweise isocyclische Ringsysteme wie Naphthalin- oder insbesondere Benzolderivate wie Bisphenol A eingesetzt werden können. Darüber hinaus eignen sich Polyole aus der Gruppe der Kohlenhydrate, beispielsweise Mono- oder Polysaccharide.

Gegebenenfalls können bei einer solchen Kettenverlängerung noch niedermolekulare Aminoverbindungen vorliegen. Hierzu geeignet sind beispielsweise primäre Aminoverbindungen mit zwei bis etwa 20, beispielsweise 2 bis etwa 12 C-Atomen wie Ethylamin, n-Propylamin, i-Propylamin, n-Propylamin, sek.-Propylamin, tert.-Butylamin, 1-Aminoisobutan, substituierte Amine mit zwei bis etwa 20 C-Atomen wie 2-(N,N-Dimethylamino)-1-aminoethan, Aminomercaptane wie 1-Amino-2-mercaptoethan, aliphatische Aminoalkohole mit 2 bis etwa 20, vorzugsweise 2 bis etwa 12 C-Atomen, beispielsweise Methanolamin, 1-Amino-3,3-dimethyl-pentan-5-ol, 2-Aminohexan-2',2"-diethanolamin, 1-Amino-2,5-dimethylcyclohexan-4-ol- 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, aromatisch-aliphatische oder aromatischcycloaliphatische Aminoalkohole mit 6 bis etwa 20 C-Atomen, wobei als aromatische Strukturen heterocyclische Ringsysteme oder vorzugsweise isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol oder Gemische aus zwei oder mehr solcher Verbindungen.

Die Herstellung der Polymerpolyole wird nach den üblichen Regeln der organischen Polymerchemie durchgeführt. Wenn als Polymerpolyol ein Polyester, ein Polyether, ein Polycarbonat, ein Polyacetal oder eine sonstige als Polymerpolyol einsetzbare Verbindung eingesetzt wird, so wird deren Herstellung nach üblichen, dem Fachmann bekannten Methoden der Polymerchemie durchgeführt. Sollen verschiedene der genannten, als Polymerpolyole einsetzbaren Verbindungen miteinander aufgrund eines zu geringen Molekulargewichts der einzelnen Verbindungen verbunden werden, so geschieht dies, in Abhängigkeit von der zur Kettenverlängerung verwendeten difunktionellen Verbindung, ebenfalls nach den üblichen, in der organischen Chemie bekannten Regeln für die jeweiligen funktionellen Gruppen.

Anstelle von oder zusammen mit den oben genannten Alkoholen können auch mehrwertige primäre oder sekundäre Amine als Kettenbausteine eingesetzt werden, ebenso auch Aminocarbonsäuren und niedermolekulare Eiweißverbindungen. Konkret seien genannt: Polyoxyethylen-, Polyoxypropylen- und Polyoxybutylendiamin - und zwar sowohl die Homo- als auch die Copolymere auf Basis dieser Monomeren - mit Molekulargewichten bis zu 5 000 (Jeffamine) bzw. Glycin, Alanin, Valin, Leucin, Cystein, Cystin, Asparginsäure, Glutaminsäure, Tyrosin, Tryptophan, ε-Amino-capronsäure, 11-Aminoundecansäure, 4-Amino-buttersäure, Mono- und Di-amino-naphthoesäure. Der Anteil dieser Stoffe sollte weniger als 20, vorzugsweise weniger als etwa 10 Mol-% betragen, bezogen auf die zur Herstellung des erfindungsgemäßen Klebstoffs eingesetzten Polyole.

Zur Funktionalitätsbegrenzung von in einem erfindungsgemäßen Polyurethanpräpolymeren vorliegenden Polyisocyanatpräpolymeren können bis zu 30 % der NCO-Gruppen mit monofunktionellen Stoffen reagieren, insbesondere mit Mono-Alkoholen, - Aminen und - Carbonsäuren. Eine entsprechende Möglichkeit zur Funktionalitätsbegrenzung ist beispielsweise in der EP 0746 577 beschrieben.

Ein als Bestandteil eines erfindungsgemäßen Klebstoffs eingesetztes Polyisocyanatpräpolymeres kann gegebenenfalls auch unter Verwendung eines tertiären Amins mit mindestens einer funktionellen Gruppe zum Einbau in die Polymerkette hergestellt werden, wobei ein derartiges Amin in die Polymerkette eingebaut wird.

Die Anzahl der funktionellen Gruppen eines solchen tertiären Amins beträgt vorzugsweise 2. Es sind aber auch 3 oder 1 funktionellen Gruppen pro tertiärem Amin möglich.

Geeignete tertiäre Amine weisen beispielsweise als funktionelle Gruppen -OH, -SH,-COOH, -NCO, -NH₂ oder NHR oder ein Gemisch aus zwei oder mehr davon auf, wobei R für eine Alkylgruppe mit 1 bis 25 C-Atomen steht. Vorzugsweise werden OH-Gruppen enthaltende Amine eingesetzt. Geeignete Verbindungen sind beispielsweise N,N-Dimethylethanolamin, N,N-Dimethyldiaminoethan, N-Methyldiethanolamin, N,N-dimethyl-2-(2-Dimethylaminoethoxy-)ethanol, N,N,N-Trimethyl-N-hydroxethyl-diaminoethan-bisaminoethylether, N,N-Bis-(3-dimethylaminopropyl-)N-isopropanolamin, Tetramethyliminobispropylamin oder N-(3-Dimethylaminopropyl-)-N,N-diisopropanolamin oder Gemische aus zwei oder mehr davon.

Geeignete tertiäre Amine können bei der Herstellung der im erfindungsgemäßen 1K-PUR-Klebstoff enthaltenen Polyisocyanatpräpolymeren in einer Menge von 0 bis 10, beispielsweise 0,1 bis 5 oder etwa 0,5 bis etwa 3 g pro 100 g Präpolymerern eingesetzt werden.

Ein zum Einsatz in einem erfindungsgemäßen Klebstoff geeignetes Polyurethanpräpolymeres weist ein Molekulargewicht von mindestens etwa 500, vorzugsweise jedoch mindestens etwa 1000 auf. Besonders geeignet sind Polyisocyanatpräpolymere mit einem Molekulargewicht von mindestens etwa 2000, beispielsweise mindestens etwa 2500, mindestens etwa 3000, mindestens etwa 3500 oder mindestens etwa 4000, beispielsweise mindestens etwa 6000. Die Obergrenze des Molekulargewichts wird im wesentlichen nur durch die Handhabbarkeit des Klebstoffs bestimmt, der Klebstoff muß insgesamt zumindest streichfähig, vorzugsweise pastös oder flüssig sein. Dies kann gegebenenfalls durch Verwendung von Plastifizierern oder Lösemitteln erreicht werden, im Rahmen einer bevorzugten Ausführungsform der vorliegenden Erfindung enthalten die erfindungsgemäßen Klebstoffe jedoch keine Lösemittel.

Es ist erfindungsgemäß ebenso vorgesehen, die erfindungsgemäßen Präpolymere in einem als Schmelzklebstoff einsetzbaren Klebstoff zu verwenden. In diesem Fall kann ein erfindungsgemäßes Polyurethanpräpolymeres beispielsweise ein Molekulargewicht aufweisen, das zu bei Raumtemperatur äußerst zähflüssigen oder festen Polymeren führt. In diesem Fall ist entscheidend, dass ein erfindungsgemäßer Klebstoff, der mindestens ein erfindungsgemäßes Polyurethanpräpolymeres enthält, bei der Verarbeitungstemperatur, also beispielsweise bei einer Temperatur von etwa 40 bis etwa 200 °C eine geeignete Viskosität aufweist.

Es ist daher erfindungsgemäß bevorzugt, wenn ein zum Einsatz in einem erfindungsgemäßen Klebstoff, der beispielsweise bei üblichen Umgebungstemperaturen von etwa 0 bis etwa 40 °C eingesetzt wird, geeignetes Polyisocyanatpräpolymeres eine Brookfield Viskosität in einem Bereich von etwa 500 bis etwa 100.000 mPas, beispielsweise etwa 1.000 bis etwa 20.000 mPas oder etwa 5.000 bis etwa 15.000 mPas aufweist (gemessen mit Brookfield Digital Viscometer RTVDV-II Spindel 6 bei 23°C Viskositätsmessung nach EN ISO 2555).

Neben mindestens einem erfindungsgemäß hergestellten Polyisocyanatpräpolymeren kann ein erfindungsgemäßer Polyurethanklebstoff noch mindestens einen Katalysator enthalten. Als Katalysatoren eignen sich beispielsweise tertiäre Amine, die nicht in die Präpolymerkette eingebaut werden wie Diazabicyclooctan (Dabco), Triethylamin, Dimethylbenzylamin (Desmorapid DB, BAYER), Bis-dimethylaminoethylether (Calalyst A I, UCC), Tetramethylguanidin, Bis-dimethylaminomethyl-phenol, 2,2'-Dimorpholinodiethylether, 2-(2-Dimethylaminoethoxy)ethanol, 2-Dimethylaminoethyl-3-dimethylaminopropylether, Bis-(2-dimethylaminoethyl)ether, N,N-Dimethylpiperazin, N-(2-hydroxyethoxyethyl)-2-azanorborane, Tacat DP-914 (Texaco·Chemical), Jeffcat^{™}, N,N,N,N-Tetramethylbutan-1,3-diamin, N,N,N,N-Tetramethylpropan-1,3-diamin oder N,N,N,N-Tetramethylhexan-1,6-diamin oder Gemische aus zwei oder mehr davon.

Die Katalysatoren können auch in oligomerisierter oder polymerisierter Form vorliegen, z.B. als N-methyliertes Polyethylenimin.

Als Katalysatoren geeignet sind darüber hinaus 1-Methylimidazol, 2-Methyl-1-vinylimidazol, 1-Allylimidazol, 1-Phenylimidazol, 1,2,4,5-Tetramethylimidazol, 1-(3-Aminopropyl)imidazol, Pyrimidazol, 4-Dimethylamino-pyridin, 4-Pyrrolidinopyridin, 4-Morpholino-pyridin, 4-Methylpyridin oder N-Dodecyl-2-Methyl-imidazol oder Gemische aus zwei oder mehr davon.

Neben oder anstatt der tertiären Amine können auch metallorganische Verbindungen wie Organozinnverbindungen von Carbonsäuren, starke Basen wie Alkalihydroxide, - alkoholate und -phenolate, z.B. Di-n-Octyl-zinn-mercaptid, Dibutylzinnmaleat, -diacetat, - dilaurat, -dichlorid, -bisdodecylmercaptid, Zinn-II-acetat, -ethylhexoat und -diethylhexoat oder Blei-phenyl-ethyl-dithiocarbaminat in einem erfindungsgemäßen PU-Klebstoff enthalten sein.

Im Rahmen einer bevorzugten Ausführungsform der vorliegenden Erfindung enthält ein erfindungsgemäßer PU-Klebstoff als Katalysator 2,2'-Dimorpholinodiethylether, 2-(2-Dimethylaminoethoxy)ethanol, 2-Dimethylaminoethyl-3-dimethylaminopropylether, Bis-(2-dimethylaminoethyl)ether, N,N-Dimethylpiperazin, N-(2-hydroxyethoxyethyl)-2-azanorborane, Tacat DP-914 (Texaco Chemical), Jeffcat^{™}, N,N,N,N-Tetramethylbutan-1,3-diamin, N,N,N,N-Tetramethylpropan-1,3-diamin oder N,N,N,N-Tetramethylhexan-1,6-diamin oder Gemische aus zwei oder mehr davon, insbesondere 2,2'-Dimorpholinodiethylether.

Neben einem oder mehreren Polyisocyanatpräpolymeren und einem oder mehreren Katalysatoren kann ein erfindungsgemäßer PU-Klebstoff noch mindestens ein 2 bis 4, vorzugsweise 3 OH-Gruppen aufweisendes Aminopolyetherpolyol mit einem Molverhältnis von Ethergruppen zu Aminostickstoffatomen von etwa 7 bis etwa 30, insbesondere etwa 9 bis etwa 25 oder etwa 11 bis etwa 20 enthalten. Der Begriff "enthalten" ist dabei im Hinblick auf das Aminopolyetherpolyol dahingehend auszulegen, dass das Aminopolyetherpolyol oder ein Gemisch aus zwei oder mehr geeigneten Aminopolyetherpolyolen in die Polymerkette des Polyisocyanatpräpolymeren eingebunden vorliegt und dabei den Polymerpolyolen zugerechnet wird.

Im Rahmen einer bevorzugten Ausführungsform der vorliegenden Erfindung werden Aminopolyetherpolyole als Bestandteil der erfindungsgemäßen Polyurethanpräpolymeren eingesetzt, die nur einen Aminostickstoff pro Molekül aufweisen.

Als Aminopolyetherpolyole eignen sich daher grundsätzlich alle Aminopolyetherpolyole wie sie beispielsweise durch Umsetzung eines 3 OH-Gruppen tragenden tertiären Amins mit Alkylenoxiden unter geeigneten Bedingungen, beispielsweise unter den oben im Zusammenhang mit der Herstellung von Polyetherpolyolen beschriebenen Reaktionsbedingungen herstellen lassen. Im Rahmen einer bevorzugten Ausführungsform der vorliegenden Erfindung werden als Bestandteil eines erfindungsgemäßen Polyurethanpräpolymeren Aminopolyetherpolyole eingesetzt, die durch Umsetzung von Trialkanolaminen der allgemeinen Formel N(-R¹-OH)₃, worin die Reste R¹ jeweils unabhängig voneinander für einen linearen oder verzweigten, gesättigten oder ungesättigten Alkylenrest mit 1 bis 22, insbesondere 2 bis 5 C-Atomen stehen, erhältlich sind.

Besonders geeignet sind dabei Aminopolyetherpolyole auf der Basis von Trialkanolaminen der allgemeinen Formel N(-R¹-OH)₃, worin die Reste R¹ jeweils unabhängig voneinander für lineare, gesättigte Alkylenreste mit 2 bis 4 C-Atomen (Ethylen, n-Propylen oder n-Butylen) stehen.

Die erfindungsgemäß einsetzbaren Aminopolyetherpolyole weisen Ethergruppen auf, wobei das Gesamtverhältnis von Ethergruppen (R-O-R) zu Aminostickstoffatomen pro Molekül in einem Aminopolyetherpolyol etwa 7 bis etwa 30, insbesondere etwa 9 bis etwa 25 oder etwa 11 bis etwa 20 oder etwa 11 bis etwa 15, beispielsweise etwa 12 bis etwa 19 oder etwa 13 bis etwa 18 oder etwa 14 bis etwa 17 oder etwa 15 bis etwa 16 beträgt. Die Ethergruppen werden beispielsweise durch Umsetzung eines Trialkanolamins mit cyclischen Ethern erzeugt. Vorzugsweise werden dabei cyclische Ether mit 2 bis etwa 6 C-Atomen, insbesondere Alkylenoxide mit 2 bis etwa 4 C-Atomen, beispielsweise Ethylenoxid oder Propylenoxid, eingesetzt.

Ein im Rahmen der vorliegenden Erfindung einsetzbares Aminopolyetherpolyol kann Ethergruppen aufweisen, die aus der Umsetzung mit nur einer Sorte cyclische Ether stammen. Es ist jedoch im Rahmen der vorliegenden Erfindung ebenso möglich Aminopolyetherpolyole einzusetzen, deren Ethergruppen aus der Umsetzung mit zwei oder mehr Sorten cyclischer Ether stammen. Eine solche Umsetzung kann dabei alternierend, blockweise oder statistisch erfolgt sein.

Besonders bevorzugt sind im Rahmen der vorliegenden Erfindung Aminopolyetherpolyole wie sie sich durch Umsetzung eines Trialkanolamins, insbesondere durch Umsetzung von Triethanolamin oder Tripropanolamin mit Ethylenoxid oder Propylenoxid oder deren Gemisch erhalten lassen.

Es hat sich für die erfindungsgemäßen Klebstoffe als vorteilhaft herausgestellt, wenn der Gehalt eines erfindungsgemäßen Klebstoffs an Alkalimetallionen unterhalb einer bestimmten Grenze, beispielsweise unterhalb von etwa 20 ppm, vorzugsweise unterhalb von etwa 10 ppm, beispielsweise unterhalb von etwa 5 ppm, bezogen auf das Polyisocyanatpräpolymere oder die Polyisocyanatpräpolymeren, liegt.

Der Anteil an Katalysator oder Gemisch aus zwei oder mehr Katalysatoren am erfindungsgemäßen Klebstoff beträgt etwa 0,01 bis etwa 6 Gew.-%, beispielsweise etwa 0,1 bis etwa 2 Gew.-%, wobei die Katalysatormenge je nach Anwendungsbedarf variieren kann.

Der Anteil an Aminopolyetherpolyol oder Aminopolyetherpolyolen am erfindungsgemäßen Klebstoff beträgt etwa 0,2 bis etwa 4 Gew.-%, insbesondere etwa 0,5 bis etwa 2 Gew.-%.

Darüber hinaus kann der erfindungsgemäße Klebstoff auch noch übliche Additive enthalten, wie z. B. Füllstoffe wie Kreide, mineralische Silikate, beispielsweise Schichtsilikate, Kunststoffe, Hohlkugeln, Kieselsäuren, Füllstoff-Fasern, Pigmente, Entschäumer, Haftvermittler, Weichmacher, Alterungsschutzmittel und CO₂₋absorbierende bzw. adsorbierende Zusatzstoffe, z. B. Molekularsiebe und Kieselgel. Es können aber auch Stoffe hinzugefügt werden, die mit dem CO₂ chemisch reagieren, z.B. CaO.

Im Rahmen einer bevorzugten Ausführungsform der vorliegenden Erfindung enthält ein erfindungsgemäßer Klebstoff synthetische oder natürliche Fasern, insbesondere Faserkurzschnitte in einer Menge von etwa 0,1 bis etwa 5 Gew.-%, beispielsweise etwa 0,2 bis etwa 2 Gew.-%.

Zu den weiteren im Rahmen der vorliegenden Erfindung als Zusatzstoffe in einem erfindungsgemäßen Klebstoff einsetzbaren Stabilisatoren oder Antioxidantien, zählen sterisch gehinderte Phenole hohen Molekulargewichts (Mₙ), polyfunktionelle Phenole und schwefel- und phosphorhaltige Phenole. Im Rahmen der Erfindung als Zusatzstoffe einsetzbare Phenole sind beispielsweise 1,3,5-Trimethyl-2,4,6-tris(3,5-di-tert-butyl-4-hydroxybenzyl)benzol; Pentaerythrittetrakis-3-(3,5-di-tert-butyl-4-hydroxyphenyl)propionat; n-Octa-decyl-3,5-di-tert-butyl-4-hydroxyphenyl)propionat; 4,4-Methylenbis(2,6-di-tert-butyl-phenol); 4,4-Thio-bis(6-tert-butyl-o-cresol); 2,6-Di-tert-butylphenol; 6-(4-Hydroxyphenoxy)-2,4-bis(n-octyl-thio)-1,3,5-triazin; Di-n-Octadecyl-3,5-di-tert-butyl-4-hydroxybenzylphosphonate; 2-(n-Octylthio)ethyl-3,5-di-tert-butyl-4-hydroxybenzoat; und Sorbithexa[3-(3,5-di-tert-butyl-4-hydroxyphenyl)propionat].

Als Photostabilisatoren sind beispielsweise diejenigen geeignet, die unter dem Namen Thinuvin® (Hersteller: Ciba Geigy) im Handel erhältlich sind.

Der erfindungsgemäße Klebstoff hat bei Verarbeitungstemperatur eine Viskosität von etwa 500 bis etwa 100.000 mPas, beispielsweise etwa 1.000 bis etwa 20.000 mPas oder etwa 2.000 bis etwa 15.000 mPas aufweist. Die Viskosität ändert sich bei Lagerung nur unwesentlich, d.h. der Klebstoff ist dann noch brauchbar. Konkret ändert sich die Viskosität innerhalb von 3 Monaten bei 40 °C unter Feuchtigkeitsausschluß allenfalls im Bereich von maximal +250 %, insbesondere von maximal +100 %, bezogen auf die Ausgangsviskosität. Die Viskosität wird wie weiter unten angegeben mit einem Brookfield-Viskosimeter bestimmt.

Der erfindungsgemäße Klebstoff weist NCO-Gruppen in solchen Mengen auf, daß sich nach dem Auftrag des Klebstoffs auf ein Substrat eine merkliche Verfestigung ergibt. Zweckmäßigerweise sollte der NCO-Gehalt in einem Bereich von etwa 1 bis etwa 20 g NCO pro 100 g Klebstoff, insbesondere bei etwa 5 bis etwa 19 oder etwa 3 bis etwa 15 oder etwa 8 bis etwa 13, beispielsweise etwa 10 bis etwa 12 g/100g Klebstoff (Gew.-%) liegen. Der NCO-Gehalt wird nach DIN EN 1242 (entspricht BS EN 1242) bestimmt.

Die Herstellung des in einem erfindungsgemäßen Klebstoff enthaltenen Polyisocyanatpräpolymeren kann sowohl in einem einstufigen als auch in einem mehrstufigen Verfahren erfolgen, wobei die allgemein üblichen, dem Fachmann bekannten Verfahrensbedingungen zur Herstellung von NCO-Präpolymeren eingehalten werden.

Beim bevorzugten einstufigen Verfahren werden beispielsweise zunächst alle Ausgangsstoffe, gegebenenfalls in Gegenwart eines organischen Lösemittels und vorzugsweise unter inerten Bedingungen, beispielsweise unter Schutzgas, bei einem Wassergehalt von weniger als etwa 0,5 Gew.-%, vorzugsweise weniger als etwa 0,1 oder etwa 0,05 Gew.-%, gemischt. Die Mischung wird auf etwa 40 bis etwa 110°C, insbesondere auf etwa 60 bis etwa 98°C für einen Zeitraum von etwa 0,1 bis etwa 3, insbesondere etwa 0,5 bis etwa 2 Stunden erhitzt. Die Reaktionszeit zur Herstellung des Polyisocyanatpräpolymeren oder des gesamten Klebstoffs kann durch Zugabe von Katalysatoren verkürzt werden. Als Katalysatoren sind beispielsweise die oben genannten tertiäre Amine oder metallorganische Katalysatoren geeignet. Beispielsweise sind dies Triethylamin, Dimethylbenzylamin, Bis-dimethylaminoethylether und Bis-methylaminomethylphenol. Besonders zur Herstellung des Polyisocyanatpräpolymeren geeignet sind beispielsweise 1-Methylimidazol, 1-Methyl-1-vinylimidazol, 1-Allylimidazol, 1-Phenylimidazol, 1,2,4,5-Tetramethylimidazol, 1-(3-Aminopropyl)imidazol, Pyrimidazol, 4-Dimethylaminopyridin (DMAP), 4-Pyrrolidinopyridin, 4-Morpholinopyridin und 4-Methylpyridinoder metallorganische Verbindungen wie Eisen-, Titan- oder Zinnverbindungen, insbesondere die 1,3-Dicarbonylverbindungen des Eisens oder des 2- bzw. 4-wertigen Zinns, insbesondere die Sn(II)-Carboxy-late bzw. die Dialkyl-Sn-(IV)-Dicarboxylate oder die entsprechenden Dialkoxylate, beispielsweise Dibutylzinndilaurat, Dibutylzinndiacetat, Dioctylzinndiacetat, Dibutylzinnmaleat, Zinn(II)octoat, Zinn(II)phenolat oder die Acetyl-acetonate des 2- bzw. 4-wertigen Zinns.

Grundsätzlich ist die Reihenfolge der Zugabe der einzelnen Komponenten beliebig. So können beispielsweise die Polyole vorgelegt und anschließend mit den Polyisocyanaten versetzt werden.

Gegenstand der vorliegenden Erfindung ist daher auch ein Verfahren zur Herstellung eines erfindungsgemäßen Polyurethanpräpolymeren, bei dem mindestens ein aromatisches Polyisocyanat das eine im Hinblick auf NCO-Gruppen symmetrische Substitution aufweist und mindestens ein aromatisches Polyisocyanat das eine im Hinblick auf NCO-Gruppen asymmetrische Substitution aufweist und mindestens ein Polyol mit einer OH-Funktionalität von mehr als 2,5 mit einem Molekulargewicht von 1.000 oder weniger und mindestens ein Polyol mit einer OH-Funktionalität von 2,5 oder weniger und einem Molekulargewicht von 1.000 oder mehr miteinander umgesetzt werden, wobei der Anteil an aromatischem Polyisocyanat das eine im Hinblick auf NCO-Gruppen symmetrische Substitution aufweist oder der Anteil an Gemisch aus zwei oder mehr solcher aromatischen Polyisocyanate höher ist, als der Anteil an Polyisocyanat das eine im Hinblick auf NCO-Gruppen asymmetrische Substitution aufweist.

Im Rahmen einer bevorzugten Ausführungsform der vorliegenden Erfindung werden bei der Herstellung des erfindungsgemäßen Klebstoffs zuerst die Polyole vermischt und anschließend die Isocyanate als Gemisch zugegeben.

Ein aus erfindungsgemäßer Klebstoff weist eine neutrale, helle Farbe auf und lässt sich universell, beispielsweise an porösen Oberflächen, einsetzen. Dabei zeichnet sich die Leimfuge deutlich weniger ab, als es bei im Hinblick auf ihre Klebeeigenschaften vergleichbaren Klebstoffe auf Basis von Polymer-MDI der Fall ist.

Diese Vorteile gelten insbesondere für die anspruchsvollen Formverleimungen, bei den bis zu 20 oder mehr Fugen in einem Formteil vorkommen können. Da der Klebstoff gerade bei der Formverleimung lange Verarbeitungszeiten voraussetzt und schnelle Aushärtezeiten aus wirtschaftlicher Sicht anzustreben sind, eignet sich der erfindungsgemäße Klebstoff mit oben beschriebenen Vorteilen besonders für derartige Formverleimungen.

Gegenstand der vorliegenden Erfindung ist daher auch die Verwendung eines erfindungsgemäßen Klebstoffs oder eines nach einem erfindungsgemäßen Verfahren hergestellten Klebstoffs zur Verklebung von porösen Materialien wie Holz, Holzwerkstoffen, Papier, Pappe, Leder, Textilien, Faservliesen, Naturfasern, Kunstfasern oder Kunststoffen.

Die Erfindung wird nachfolgend durch Beispiele näher erläutert.

### Beispiele:

Zur Überprüfung der Wirksamkeit des erfindungsgemäßen Klebstoffs wurden die folgenden Klebstoffrezepturen angefertigt (Angaben in Gew.-%):

| Beispiel V1: Vergleichsbeispiel | |
|---|---|
| Lupranol 1000 | 59,5% |
| Desmodur VKS 20 F | 40,5% |

| Beispiel V2: Vergleichsbeispiel | |
|---|---|
| Lupranol 1000 | 61,0% |
| Desmodur VKS 20 F | 39,0% |

| Beispiel V3: Vergleichsbeispiel | |
|---|---|
| Lupranol 1000 | 59,5 |
| Suprasec 2385 | 40,5 |

| Beispiel V4: Vergleichsbeispiel | |
|---|---|
| Lupranol 1000 | 48,0 |
| Voranol CP 450 | 4,0 |
| Lupranat MIS | 48,0 |

| Beispiel B1: erfindungsgemäß | |
|---|---|
| Lupranol 1000 | 46,0 |
| Voranol CP 450 | 4,0 |
| Suprasec 2385 | 50,0 |

| BeispieLB2: erfindungsgemäß | |
|---|---|
| Lupranol 1000 | 47,8 |
| Voranol CP 450 | 4,0 |
| Suprasec 2004 | 48,2 |

Herstellvorschrift für die Präpolymere V1 bis V4 und B1, B2

Bei der Herstellung der Präpolymere wurde zum Zweck der Vergleichbarkeit das NCO/OH-Verhältnis bei allen Beispielen auf ca. 5,0 zu 1 berechnet. Außerdem wurden auf 100 GT Präpolymer
- 0,05 GT DBTL
- 0,50 GT DMDEE
- 0,05 GT Benzoylchlorid
zugegeben.

Die eingesetzten Polyole wurden bei 70°C und 15 mbar in einem evakuier-, beheiz- und kühlbaren PC-Labordissolver bei 100 Upm entwässert. Zur Kontrolle des Wassergehaltes folgte eine Wasserbestimmung nach Karl-Fischer. Das Polyolgemisch sollte nach der Entwässerung weniger als 200 ppm Wasser enthalten. Nach dem Abkühlen auf 30°C wurde das Isocyanat unter Rühren zugegeben und unter Schutzgas bei 200 Upm weiter unter Normaldruck auf 75°C aufgeheizt. Dann wurde unter Rühren der Katalysator DBTL zugegeben und weiter unter Normaldruck und 200 Upm präpolymerisiert. Durch exotherme Reaktion stieg die Temperatur auf ca. 95°C. Es wurde darauf geachtet, dass eine Temperatur von 95°C nicht überschritten wurde, gegebenenfalls wurde gekühlt. Es wurde dann ohne Heizung weitere 30 Minuten präpolymerisiert, wobei 85 °C nicht unterschritten wurden. Wenn die theoretische NCO-Zahl von ± 0,4 % erreicht war, wurde der Ansatz unter gleichen Rührbedingungen auf Raumtemperatur abgekühlt, belüftet und der Schaumkatalysator DMDEE und zur Stabilisierung Benzoylchlorid zugegeben. Es folgte ein Nachrühren von 15 min. bei 15 mbar. Es ist dabei darauf zu achten, dass während der Herstellung des Präpolymeren keine Feuchtigkeit an den Klebstoff gelangt. Die gesamte Herstellung erfolgte unter Schutzgas. Nach den Vakuumphasen wurde ebenfalls mit Schutzgas belüftet
Bezugsquellen, Spezifikationen
Lupranol 1000, Fa. BASF, OHZ ca. 55, Molekulargewicht ca. 2000, Polypropylenglykol
Voranol CP 450, Fa. Brenntag, OHZ ca. 380, Molekulargewicht ca. 440, Polyethertriol, Funktionalität ca. 3,0
Desmodur M 44, Fa. Bayer, 4,4-Diphenylmethandiisocyanat, NCO-Gehalt ca. 33,0 %, Funktionalität ca. 2,0 Anteil an 2,4-MDI < 2,0 %,
Desmodur VKS 20 F, Fa. Bayer, 4,4- Diphenylmethandiisocyanat, NCO-Gehalt ca. 30,5 %, Funktionalität ca. 2,7 Anteil an 2,4-MDI ca. 3,4 %
Suprasec 2385, Fa. ICI, 4,4- Diphenylmethandiisocyanat, NCO-Gehalt ca. 30,9 %, Funktionalität ca. 2,0 Anteil an 2,4-MDI ca. 17,5 %
Suprasec 2004, Fa. ICI, 4,4- Diphenylmethandiisocyanat, NCO-Gehalt ca. 32,8 %, Funktionalität ca. 2,0 Anteil an 2,4-MDI ca. 26,1 %
Lupranat MIS, Fa. BASF, 4,4- Diphenylmethandiisocyanat, NCO-Gehalt ca. 33,0 %, Funktionalität ca. 2,0 Anteil an 2,4-MDI ca. 47,8 %
DBTL, Fa. Brenntag, Organo-Zinverbindung, Dibutyldizinnlaurat
Dabco-DMDEE, Fa. Air Products, Dimorpholinodiethylether 2,2'
Benzoylchlorid, Fa. Bayer, 99,5 % ig

### Eigenschaften der Klebstoffe

**Tabelle 1 Farbe**

| | V1 | V2 | V3 | V4 | B1 | B2 |
|---|---|---|---|---|---|---|
| Farbe | braun | opak | gelblich hell | gelblich hell | gelblich hell | gelblich hell |

**Tabelle 2 Viskositäten**

| | V1 | V2 | V3 | V4 | B1 | B2 |
|---|---|---|---|---|---|---|
| Viskosität | 28500 | 5200 | 7700 | 4500 | 9700 | 5300 |

**Tabelle 3 Offene Zeit**

| | V1 | V2 | V3 | V4 | B1 | B2 |
|---|---|---|---|---|---|---|
| Offene Zeit | 10 | 5 | 13 | 14 | 10 | 12 |

**Tabelle 4 Querzugsanfangsfestigkeit**

| | V1 | V2 | V3 | V4 | B1 | B2 |
|---|---|---|---|---|---|---|
| QZF | 3800 | 3900 | 3700 | 1600 | 4000 | 3800 |

**Tabelle 5 Wärmefestigkeit**

| | V1 | V2 | V3 | V4 | B1 | B2 |
|---|---|---|---|---|---|---|
| Wärmestandfestigkeit | 9,2 | 7,1 | 7,4 | 8,8 | 9,9 | 9,1 |

**Tabelle 6 Wasserfestigkeit**

| | V1 | V2 | V3 | V4 | B1 | B2 |
|---|---|---|---|---|---|---|
| Wasserfestigkeit | 5,8 | 4,7 | 3,9 | 3,2 | 6,5 | 5,9 |

**Tabelle 7 NCO-Gehalte**

| | V1 | V2 | V3 | V4 | B1 | B2 |
|---|---|---|---|---|---|---|
| NCO-Gehalt | 10,2 | 10,3 | 10,0 | 12,5 | 12,3 | 12,8 |

**Tabelle 8 Lagerstabilität**

| | V1 | V2 | V3 | V4 | B1 | B2 |
|---|---|---|---|---|---|---|
| Viskosität | 44000 | 7800 | 11100 | 7800 | 14700 | 10200 |

### Prüfmethoden

### Bestimmung des Isocyanatgehaltes (NCO-Gehalt)

Nach EN 1242 bzw. DIN EN 1242 und auch BSEN 1242 Angabe in % NCO.

### Bestimmung der Viskosität

Brookfield Digital Viscometer RTVDV-II Spindel 6 bei 23°C Viskositätsmessung nach EN ISO 2555, Angabe in mPas

### Gehaltsbestimmung MDI-Stellungsisomerie (Anteil an 2,4-MDI)

Gaschromatographisch

### Bestimmung der offenen Zeit

Die Messung erfolgt an konditionierter, bei 23°C und 50 % relativer Luftfeuchte gelagerter, ungedämpfter massiver Buche (Fagus sylvatica) mit einer Holzfeuchte von 8-9 % und einem Klebstoffauftrag von 200N.

Zur Messung wird unter konstanten klimatischen Bedingungen bei 23°C und 50 % relative Lufeuchte (r.F.) der zu prüfende, bei 23°C gelagerte Klebstoff mit einer Spiralrakel aufgetragen. Es wird die Zeit festgehalten, bei welcher der Klebstoff nicht mehr verläuft. Dazu wird in Abständen von 30 Sekunden ein 1 cm breiter und 10 cm langer Buchenstab in das Klebstoffbett eingelegt und für 3 Sekunden mit einem Gewicht von 2 kg belastet. Nach dieser Zeit wird der Buchenstab abgehoben und die Klebeflächen beurteilt. Wenn der Klebstoff noch verläuft, ist die offene Zeit noch nicht überschritten. Erst wenn der Klebstoff nicht mehr verläuft und anfängt Fäden zu ziehen, ist die offene Zeit überschritten. Es wird die Zeit bestimmt, bei welcher der Klebstoff noch verläuft.

### Angabe: Zeit in Minuten

### Bestimmung der Querzugsanfangsfestigkeit (QZF)

Die Prüfung erfolgt an stumpf verleimter massiver, bei 23°C und 50 % relativer Luftfeuchte gelagerter, ungedämpfter und gehobelter Buche (Fagus sylvatica) mit einer Holzfeuchtigkeit von 8 bis 9 %. Dazu werden 5 Buchenhölzer mit den Maßen Länge=20 cm, Breite=4 cm, Dicke=2 cm mit den Schmalseiten so aneinandergeleimt, dass eine Gesamtfläche von 20 mal 20 cm entsteht. Die einzelnen Buchenhölzer sind jeweils am Kopfende 24 mm tief, im Winkel von 20° schräg abgeschnitten, so dass bei der Verleimung der Einzelteile ein gleichschenkliger Keilausschnitt mit einem Gesamtwinkel beider Schenkel von 40° entsteht, der eine Tiefe von 24 mm und eine breite Schulter von 18,5 mm hat. So entsteht an jeder Klebefuge ein Keilausschnitt von 2 cm Breite.

Die Prüfhölzer sind vor der Prüfung für mindestens 2 Wochen unter konstanten Bedingungen bei 23°C 50 % r.F. zu konditionieren, um sicherzustellen, dass sich eine Ausgleichsholzfeuchte zwischen 8 und 9 % einstellt. Die Verklebung der Holzteile erfolgt unter definierten klimatischen Bedingungen bei 23°C und 50 % r.F., wobei der Klebstoff selbst ebenfalls eine Temperatur von 23°C haben soll. Der Klebstoffauftrag erfolgt einseitig mit einer 200µm Spiralrakel. Gefügt werden die Teile nach einer Ablüftezeit von 1 Minute nach Applikation des Klebstoffes. Es wird ein Pressdruck zwischen 0,6 und 0,7 NImm² aufgebracht. Nach einer Presszeit von 30 min. werden die gespannten Teile entspannt und unmittelbar danach geprüft. Die Messung selbst erfolgt an einer mechanischen Zerreismaschine, bei der eine Kraftumlenkungsmechanik angebracht wurde, bei der die Prüfmaschine von einer Zugprüfungsmaschine zu einer Druckprüfmaschine umgewandelt werden kann. Zum Spalten der Prüfkörper in der Klebefläche wurde an der Kraftaufnahme ein massiver, polierter Alukeil mit einem Flankenwinkel von 20° montiert, der exakt in die Auskerbung der Prüfkörper passt, ohne dabei den Flankengrund zu berühren. Mit einer Vorschubgeschwindigkeit von 50 mm/min. wurde dann der Aluminiumkeil jeweils in die Auskerbung der Holzprüfkörper mit konstanter Geschwindigkeit gefahren und die Kraft in N ermittelt, die zum Spalten der Klebefuge notwendig war. Die vier Klebefugen werden im Abstand von jeweils 10 Sekunden gespalten. Aus den vier ermittelten Werten der vier Klebstofffugen wird dann das arithmetische Mittel errechnet.

### Angabe: Kraft in N

### Prüfkörperherstellung für DIN EN 12765 und Wärmefestigkeit

DIN EN 205 vom Oktober 1991, Bestimmung der Klebfestigkeit von Längsklebungen im Zugversuch

### Bestimmung der Wärmefestigkeit

Mit dem zu prüfendem Klebstoff werden Prüfkörper nach DIN EN 205 hergestellt. Anschließend werden diese in Anlehnung an die EN 12765 C1, Lagerungsfolge 1, im Zugscherversuch in der Wärme geprüft. Abweichend von der EN 12765 C1 wird dazu der Prüfkörper nicht bei Raumtemperatur zerrissen, sondern in der Wärme. Dazu werden die zu prüfenden Prüfkörper 1 h bei 80°C +- 1 °C im Umlufttrockenschrank gelagert. Nach Entnahme des Prüfkörpers muss der Prüfkörper innerhalb von 10 Sekunden in einer Zerreißmaschine zerrissen werden, um Wärmeverluste auszuschließen. Die Vorschubgeschwindigkeit der Zerreißmaschine beträgt 50 mm/min.
Angabe: Kraft in N/mm²

### Bestimmung der Wasserfestigkeit nach DIN EN 12765 September 2001 (EN 12765:2001)

Klassifizierung von duromeren Holzklebstoffen für nichttragende Anwendungen, geprüfte Beanspruchungsgruppe C4

### Angaben: Kraft in N/mm²

### Prüfung auf Lagerstabilität

Der zu prüfende Klebstoff wird in einer 250 ml Glasflasche mit einem Wasserdampftundurchlässigem Verschluss bei 40°C +-1 °C über einen Zeitraum von drei Monaten gelagert. Nach dieser Zeit erfolgt die Überprüfung der Viskosität.

Die Lagerstabilität gilt als in Ordnung, wenn die Endviskosität um den Faktor 2,5 oder weniger über dem Wert für die Ausgangsviskosität zu Beginn der Prüfung liegt.

### Gerätschaften

PC- Labordissolver, Typ LDV 1 der Fa. PC Laborsystem GmbH, CH 4312 Magden,

Zerreißmaschine, mechanisch, Maschinentyp ETZW 1162, 20 KN, Fa. Zwick

Zerreißmaschine, elektronisch, Modell 4302, 10 KN, Fa. Instron

### Bewertung:

Aus Tabelle 1 geht hervor, dass die Beispiele B1 und B2 annähernd farbeneutral sind, verglichen mit dem Beispiel V1. Aus Tabelle 3 ist ersichtlich, dass die offenen Zeiten der Beispiele B1 und B2 genauso lang bzw. länger sind als im Vergleichsbeispiel V1, wobei die Querzugfestigkeit, ersichtlich in Tabelle 4, auf gleich hohem Niveau liegen, wie im Beispiel V1. Beispiel V2 zeigt hingegen eine deutlich kürzere offene Zeit.

In Tabelle 5 werden bei den Beispielen B1 und B2 gleich hohe Werte in der Wärmefestigkeit gefunden, wie im Beispiel V1. Beispiele V2 und V3 hingegen haben aufgrund ihrer linearen Struktur eine weitaus niedrigere Wärmefestigkeit.

Die Wasserfestigkeit, in Tabelle 6 ersichtlich, zeigt, dass Beispiel B 1 und B2 gleich hohe bzw. bessere Werte aufweisen als Vergleichsbeispiel V1. Die Wasserfestigkeit in den Beispielen V3 und V4 ist deutlich niedriger.

### Sonstiges

Als Schutzgas wurde wasserfreier Stickstoff verwendet.
Bis auf die Prüfung der QZF wurden alle sonstigen Zerreißprüfungen an einer elektronischen Zerreißmaschine durchgeführt

## Patentansprüche

1. Klebstoff mindestens enthaltend ein Polyurethanpräpolymeres, erhältlich durch Umsetzung von mindestens einem aromatischen Polyisocyanat, das eine im Hinblick auf NCO-Gruppen symmetrische Substitution aufweist und mindestens einem aromatischen Polyisocyanat, das eine im Hinblick auf NCO-Gruppen asymmetrische Substitution aufweist, wobei der Anteil an aromatischem Polyisocyanat, das eine im Hinblick auf NCO-Gruppen symmetrische Substitution aufweist oder der Anteil an Gemisch aus zwei oder mehr solcher aromatischen Polyisocyanate höher ist, als der Anteil an Polyisocyanat, das eine im Hinblick auf NCO-Gruppen asymmetrische Substitution aufweist oder der Anteil an Gemisch aus zwei oder mehr solcher aromatischen Polyisocyanate, und mindestens einem Polyol mit einer OH-Funktionalkät von mehr als 2,5 und einem Molekulargewicht von 1000 oder weniger und mindestens einem Polyol mit einer OH-Funktionalität von weniger als 2,5 und einem Molekulargewicht von 1000 oder mehr, wobei der Klebstoff das aromatische Polyisocyanat, das eine im Hinblick auf NCO-Gruppen symmetrische Substitution aufweist oder ein Gemisch aus zwei oder mehr solcher aromatischer Polyisocyanate und das aromatische Polyisocyanat, das eine im Hinblick auf NCO-Gruppen asymmetrische Substitution aufweist oder ein Gemisch aus zwei oder mehr solcher Isocyanate in einem Gewichtsverhältnis von 5:1 bis 2,5:1 enthält

2. Klebstoff nach Anspruch 1, **dadurch gekennzeichnet, dass** zur Herstellung mindestens eines Polyurethanpräpolymeren 4,4'-Diphenylmethandiisocyanat eingesetzt wurde.

3. Klebstoff nach Anspruch 1 oder 2, **dadurch gekennzeichnet, dass** zur Herstellung mindestens eines Polyurethanpräpolymeren 2,4'-Diphenylmethandiisocyanat eingesetzt wurde.

4. Klebstoff nach einem der Anspruche 1 bis 3, **dadurch gekennzeichnet, dass** zur Herstellung mindestens eines Polyurethanpräpolymeren als Polyol mit einer Funktionalität von mehr als 2,5 ein Polyol mit einer OH-Zahl von 250 bis 600 oder ein Gemisch aus zwei oder mehr solcher Polyole eingesetzt wurde.

5. Klebstoff nach einem der Anspruche 1 bis 4, **dadurch gekennzeichnet, dass** zur Herstellung mindestens eines Polyurethanpräpolymeren das Polyol mit einer Funktionalität von mehr als 2,5 in einer Menge von 0,5 bis 10 Ges.-%, bezogen auf den gesamten Gehalt an Polyurethanpräpolymeren, eingesetzt wurde.

6. Klebstoff nach einem der Anspruche 1 bis 5, **dadurch gekennzeichnet, dass** zur Herstellung mindestens eines Polyurethanpräpolymeren als Polyol mit einer Funktionalität von weniger als 2,5 ein im wesentlichen lineares Polyesterpolyol mit einem Molekulargewicht von 1.000 bis 10.000 und mit einer OH-Zahl von 30 bis 300 oder ein Gemisch aus zwei oder mehr solcher Polyesterpolyole eingesetzt wird.

7. Verfahren zur Herstellung eines Klebstoffs gemäß einem der Anspruche 1 bis 6, bei dem mindestens ein aromatisches Polyisocyanat, das eine im Hinblick auf NCO-Gruppen symmetrische Substitution aufweist und mindestens ein aromatisches Polyisocyanat, das eine im Hinblick auf NCO-Gruppen asymmetrische Substitution aufweist und mindestens ein Polyol mit einer OH-Funktionalität von mehr als 2,5 und mindestens ein Polyol mit einer OH Funktionalität von 2,5 oder weniger miteinander umgesetzt werden, wobei der Anteil an aromatischem Polyisocyanat, daseine im Hinblick auf NCO-Gruppen symmetrische Substitution aufweist oder der Anteil an Gemisch aus zwei oder mehr solcher aromatischen Polyisocyanate höher ist, als der Anteil an Polyisocyanat, das eine im Hinblick auf NCO-Gruppen asymmetrische Substitution aufweist.

8. Verfahren nach Anspruch 7, **dadurch gekennzeichnet, dass** zuerst die Polyole vermischt und anschließend die Isocyanate als Gemisch zugegeben werden.

9. Verwendung eines Klebstoffs nach einem der Ansprüche 1 bis 6 zur Verklebung von porösen Materialien wie Holz, Holzwerkstoffen, Papier, Pappe, Leder, Textilien, Faservliesen, Naturfasern, Kunstfasern oder Kunststoffen.

## Claims

1. Adhesive at least comprising a polyurethane prepolymer, obtainable by reacting at least one aromatic polyisocyanate having symmetrical substitution in respect of NCO groups and at least one aromatic polyisocyanate having asymmetric substitution in respect of NCO groups, the fraction of aromatic polyisocyanate having symmetrical substitution in respect of NCO groups or the fraction of mixture of two of more such aromatic polyisocyanates, being higher than the fraction of polyisocyanate having asymmetric substitution in respect of NCO groups or the fraction of mixture of two or more such aromatic polyisocyanates, and at least one polyol having an OH functionality of more than 2.5 and a molecular weight of 1000 or less and at least one polyol having an OH functionality of less than 2.5 and a molecular weight of 1000 or more, the adhesive comprising the aromatic polyisocyanate having symmetrical substitution in respect of NCO groups or a mixture of two or more such aromatic polyisocyanates and the aromatic polyisocyanate having asymmetric substitution in respect of NCO groups or a mixture of two or more such isocyanates in a weight ratio of from 5:1 to 2.5:1.

2. Adhesive according to Claim 1, **characterized in that** 4,4'-diphenylmethane diisocyanate has been used for preparing at least one polyurethane prepolymer.

3. Adhesive according to Claim 1 or 2, **characterized in that** 2,4'-diphenylmethane diisocyanate has been used for preparing at least one polyurethane prepolymer.

4. Adhesive according to one of Claims 1 to 3, **characterized in that** at least one polyurethane prepolymer has been prepared using as polyol having a functionality of more than 2.5 a polyol having an OH number of 250 to 600 or a mixture of two or more such polyols.

5. Adhesive according to one of Claims 1 to 4, **characterized in that** at least one polyurethane prepolymer has been prepared using the polyol having a functionality of more than 2.5 in an amount of from 0.5 to 10% by weight, based on the total amount of polyurethane prepolymer.

6. Adhesive according to one of Claims 1 to 5, **characterized in that** at least one polyurethane prepolymer is prepared using as polyol having a functionality of less than 2.5 an essentially linear polyesterpolyol having a molecular weight of 1 000 to 10 000 and an OH number of from 30 to 300 or a mixture of two or more such polyesterpolyols.

7. Process for preparing an adhesive according to one of Claims 1 to 6, in which at least one aromatic polyisocyanate having symmetrical substitution in respect of NCO groups and at least one aromatic polyisocyanate having asymmetric substitution in respect of NCO groups and at least one polyol having an OH functionality of more than 2.5 and at least one polyol having an OH functionality of 2.5 or less are reacted with one another, the fraction of aromatic polyisocyanate having symmetrical substitution in respect of NCO groups or the fraction of mixture of two or more such aromatic polyisocyanates being higher than the fraction of polyisocyanate having asymmetric substitution in respect of NCO groups.

8. Process according to Claim 7, **characterized in that** first the polyols are mixed and then the isocyanates are added in the form of a mixture.

9. Use of an adhesive according to one of Claims 1 to 6 for adhesively bonding porous materials such as wood, wood materials, paper, board, leather, textiles, fibre webs, natural fibres, synthetic fibres or plastics.

## Revendications

1. Colle contenant au moins un prépolymère de polyuréthane, pouvant être obtenu par réaction d'au moins un polyisocyanate aromatique qui présente une substitution symétrique par rapport aux groupes NCO, et d'au moins un polyisocyanate aromatique qui présente une substitution asymétrique par rapport aux groupes NCO, la teneur en polyisocyanate aromatique qui présente une substitution symétrique par rapport aux groupes NCO ou la teneur en mélange de deux ou plusieurs de ces polyisocyanates aromatiques, étant supérieures à la teneur en polyisocyanate qui présente une substitution asymétrique par rapport aux groupes NCO ou à la teneur en mélange de deux ou plusieurs de ces polyisocyanates aromatiques, et d'au moins un polyol ayant une fonctionnalité OH de plus de 2,5 et une masse moléculaire de 1 000 ou moins, et au moins un polyol ayant une fonctionnalité OH inférieure à 2,5 et une masse moléculaire de 1 000 ou plus, la colle contenant le polyisocyanate aromatique qui présente une substitution symétrique par rapport aux groupes NCO ou un mélange de deux ou plusieurs de ces polyisocyanates aromatiques et le polyisocyanate aromatique qui présente une substitution asymétrique par rapport aux groupes NCO ou un mélange de deux ou plusieurs de ces isocyanates dans un rapport pondéral de 5:1 à 2,5:1.

2. Colle selon la revendication 1, **caractérisé en ce que** le diisocyanate de 4,4'-diphénylméthane a été mis en oeuvre pour préparer au moins un prépolymère de polyuréthane.

3. Colle selon la revendication 1 ou 2, **caractérisé en ce que** le diisocyanate de 2,4'-diphénylméthane a été mis en oeuvre pour préparer au moins un prépolymère de polyuréthane.

4. Colle selon l'une quelconque des revendications 1 à 3, **caractérisé en ce que**, pour préparer au moins un prépolymère de polyuréthane, un polyol ayant un indice OH de 250 à 600 ou un mélange de deux ou plusieurs de ces polyols, ont été mis en oeuvre en tant que polyol avec une fonctionnalité supérieure à 2,5.

5. Colle selon l'une quelconque des revendications 1 à 4, **caractérisé en ce que**, pour préparer au moins un prépolymère de polyuréthane, le polyol ayant une fonctionnalité supérieure à 2,5 a été mis en oeuvre en une quantité de 0,5 à 10% en poids, par rapport à la teneur totale en prépolymère de polyuréthane.

6. Colle selon l'une quelconque des revendications 1 à 5, **caractérisé en ce que**, pour préparer au moins un prépolymère de polyuréthane, un polyesterpolyol essentiellement linéaire avec un poids moléculaire de 1 000 à 10 000 et ayant un indice OH de 30 à 300 ou un mélange de deux ou plusieurs de ces polyesterpolyols sont mis en oeuvre en tant que polyol ayant une fonctionnalité inférieure à 2,5.

7. Procédé de préparation d'une colle selon l'une quelconque des revendications 1 à 6, dans lequel au moins un polyisocyanate aromatique qui présente une substitution symétrique par rapport aux groupes NCO et au moins un polyisocyanate aromatique qui présente une substitution asymétrique par rapport aux groupes NCO, et au moins un polyol ayant une fonctionnalité OH supérieure à 2,5 et au moins un polyol ayant une fonctionnalité OH de 2,5 ou moins, sont mis à réagir entre eux, la teneur en polyisocyanate aromatique qui présente une substitution symétrique par rapport aux groupes NCO ou la teneur en mélange de deux ou plusieurs de ces polyisocyanates aromatiques, est supérieure à la teneur en polyisocyanate qui présente une substitution asymétrique par rapport aux groupes NCO.

8. Procédé selon la revendication 7, **caractérisé en ce que** les polyols sont d'abord mélangés puis les isocyanates sont ajoutés sous forme de mélange.

9. Utilisation d'une colle selon l'une des revendications 1 à 6 pour coller des matériaux poreux comme le bois, les matériaux dérivés du bois, le papier, le carton, le cuir, les textiles, les non tissés fibreux, les fibres naturelles, les fibres artificielles ou les matières plastiques.
